(19) Europäisches Patentamt
European Patent Office
Office européen des brevets

(11) **EP 1 011 232 A2**

(12) **EUROPÄISCHE PATENTANMELDUNG**

(43) Veröffentlichungstag:
    **21.06.2000 Patentblatt 2000/25**

(51) Int. Cl.⁷: **H04L 25/02**, **H04B 7/005**

(21) Anmeldenummer: **99123904.7**

(22) Anmeldetag: **01.12.1999**

(84) Benannte Vertragsstaaten:
    **AT BE CH CY DE DK ES FI FR GB GR IE IT LI LU MC NL PT SE**
    Benannte Erstreckungsstaaten:
    **AL LT LV MK RO SI**

(30) Priorität: **18.12.1998 DE 19858724**

(71) Anmelder:
    **SIEMENS AKTIENGESELLSCHAFT**
    **80333 München (DE)**

(72) Erfinder:
• **Baier, Paul Walter, Prof.**
  **67661 Kaiserslautern (DE)**
• **Oster, Jochen**
  **67663 Kaiserslautern (DE)**
• **Weckerle, Martin**
  **67655 Kaiserslautern (DE)**

(54) **Verfahren zur Kanalschätzung**

(57)    Beim erfindungsgemäßen Verfahren werden zunächst in herkömmlicher Weise aus den auf die gesendeten Trainingssignale zurückgehenden Anteilen des Empfangssignals Informationen über die Kanaleigenschaften gewonnen. Unter Verwendung dieser Kanalinformationen werden daraufhin die gesendeten Daten geschätzt. In einem weiteren Schritt werden die geschätzten Daten nunmehr dazu benutzt, die ursprünglich gewonnenen Kanalinformationen zu verbessern und/oder zusätzliche Kanalinformationen zu gewinnen. Anwendung findet das Verfahren sowohl in TDMA-Übertragungssystemen (GSM, TDD in UMTS) als auch in CDMA-Übertragungssystemen (FDD, TDD in UMTS).

## FIG 3

Daten

Mittambel

EP 1 011 232 A2

**Beschreibung**

Die Erfindung betrifft ein Verfahren zur Kanalschätzung, insbesondere in Funk-Kommunikationssystemen.

Bei der Nachrichten- oder Datenübertragung ist es erforderlich oder zumindest wünschenswert, zwecks möglichst optimaler Datendetektion in Empfängern, d.h. Gewinnung von Informationen über gesendete Daten, die Eigenschaften von Übertragungskanäle zwischen Sender und Empfänger zu kennen und diese Kanalinformationen bei der Datendetektion einzubringen. In Funk-Kommunikationssystemen, z.B. in der Mobilkommunikation, in der Kurzwellenübertragungstechnik und bei vielen anderen Anwendungen der Funkübertragung sind die Kanaleigenschaften zeitvariant und müssen während der Übertragung laufend aktualisiert werden.

Gemäß dem Stand der Technik können den Empfängern Kanalinformationen dadurch zugänglich gemacht werden, daß die Sender gleichzeitig oder im Zeitmultiplex mit den datentragenden Signalen zusätzliche Trainingssignale aussenden, die es den Empfängern ermöglichen, die gewünschten Kanalinformationen zu gewinnen. Beispiele für diese Vorgehensweise sind aus Funk-Kommunikationssystemen die Luftschnittstellenkonzepte TD-CDMA [1] und WCDMA [2, 3] für Mobilfunksysteme der dritten Generation. TD-CDMA verwendet das hybride Vielfachzugriffsverfahren FDMA/TDMA/CDMA, und WCDMA basiert auf dem hybriden Vielfachzugriffsverfahren FDMA/CDMA. Dabei steht FDMA (Frequenzmultiplex) für frequency division multiple access, TDMA (Zeitmultiplex) für time division multiple access und CDMA (Kodemultiplex) für code division multiple access.

Bei TD-CDMA werden Trainingssignale in Form von Mittambeln gesendet, die in die abgestrahlten Funkblöcken (bursts) eingeblendet werden. Bei WCDMA wird in der Aufwärtsstrecke (von der Mobilstation zur Basisstation) kontinuierlich und/oder gleichzeitig mit den datentragenden Signalen ein Trainingssignal gesendet, während in der Abwärtsstrecke (von der Basisstation zur Mobilstation) in das datentragende Signal als Trainingssignale Pilotsymbole eingeblendet werden.

Nachteilig ist bei dem Senden von Trainingssignalen gemäß dem Stand der Technik, daß ein Teil der verfügbaren Sendeleistung und Übertragungskapazität für diese Trainingssignale benötigt wird und somit für die Datenübertragung nicht mehr zur Verfügung steht. Der Erfindung liegt die Aufgabe zugrunde, diesen Nachteil zu mildern. Die Aufgabe wird durch das Verfahren mit den Merkmalen des Anspruchs 1 gelöst. Vorteilhafte Weiterbildungen der Erfindung sind den Unteransprüchen zu entnehmen.

Dem erfindungsgemäßen Verfahren liegt folgende Idee zugrunde:

- Zunächst werden in herkömmlicher Weise aus den auf die gesendeten Trainingssignale zurückgehenden Anteilen des Empfangssignals Informationen über die Kanaleigenschaften gewonnen.
- Unter Verwendung dieser Kanalinformationen werden die gesendeten Daten geschätzt.
- In einem weiteren Schritt werden die geschätzten Daten nunmehr dazu benutzt, die ursprünglich gewonnenen Kanalinformationen zu verbessern und/oder zusätzliche Kanalinformationen zu gewinnen.

Indem die gesendeten Trainingssignale effizienter zum Gewinnen von Kanalinformation genutzt werden, wird letztlich die zur Kanalschätzung erforderliche Übertragungskapazität verringert. Damit werden funktechnische Ressourcen für andere Zwecke, z.B. zur Erhöhung der Datenraten für die datentragenden Signale, nutzbar.

Der theoretische Hintergrund des erfindungsgemäßen Verfahrens wird - ohne die Allgemeinheit einzuschränken - im folgenden am Beispiel des zeitdiskreten Modells eines TD-CDMA-Mobilfunksystems erklärt.

Die Figuren zeigen dabei

Fig 1    ein Übertragungsschema nach dem Stand der Technik,
Fig 2    einen Ablaufplan zur Kanal- und Datenschätzung,
Fig 3    ein Übertragungsschema bei verbesserter Kanalschätzung, und
Fig 4    einen Ablaufplan zur verbesserten Kanal- und Datenschätzung.

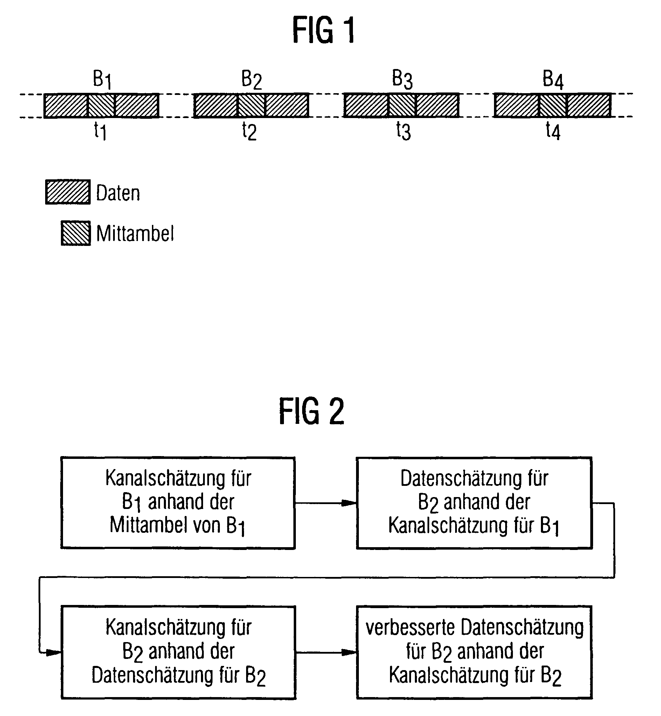

Bei einem solchen Funk-Kommunikationssystem wird in einem Burst zwischen zwei gesendete Datenblökken eine Mittambel zur Kanalschätzung eingeblendet, siehe Fig 1. Im folgenden wird bei der Beschreibung der Datendetektion nur Bezug auf den ersten Datenblock eines Bursts genommen. Für den zweiten Datenblock gilt entsprechendes. Geht man von K mobilen Teilnehmern aus, die gleichzeitig in einem Frequenzband und Zeitschlitz übertragen, so sendet jeder Teilnehmer eine Sequenz N komplexer Symbole

$$\underline{d}^{(k)}=[\underline{d}_1^{(k)},\underline{d}_2^{(k)}..\underline{d}_N^{(k)}]^T \quad k=1..K \tag{1}$$

Die Komponenten $\underline{d}_n^{(k)}$ des Vektors $\underline{d}^{(k)}$ stammen aus einem M-wertigen komplexen Symbolalphabet

$$\underline{V}_d=\{\upsilon_1,\upsilon_2,..\upsilon_M\} \tag{2}$$

Jedes Datensymbol $\underline{d}_n^{(k)}$, n = 1 , der Dauer $T_s$, wird durch einen teilnehmerspezifischen CDMA-Code

$$\underline{c}^{(k)}=[\underline{c}_1^{(k)},\underline{c}_2^{(k)},...\underline{c}_Q^{(k)}]^T, \quad k=1..K \tag{3}$$

der Länge Q gespreizt. Die Komponenten $\underline{c}_q^{(k)}$ q=1..Q, der Dauer $T_c < T_s$ sind dem $\tilde{M}$-wertigen Codealphabet entnommen. Betrachtet man beispielsweise nur eine einzige Empfangsantenne, so existieren K Übertragungskanäle zwischen den K Teilnehmern und der Empfangsantenne. Die jeweils W Komponenten der Vektoren

$$\underline{h}^{(k)}=[\underline{h}_1^{(k)},\underline{h}_2^{(k)},...\underline{h}_W^{(k)}]^T, \quad k=1..K \tag{4}$$

stellen die W Abtastwerte im zeitlichen Abstand $T_c$ der K Kanalimpulsantworten dar. Die Kanäle der einzelnen Teilnehmer lassen sich zu dem Vektor

$$\underline{h}=[\underline{h}^{(1)T},\underline{h}^{(2)T},\underline{h}^{(K)T}]^T \tag{5}$$

zusammenfassen. Diese Kanalinformationen betreffen die Übertragungsdämpfung und/oder die Verzögerungsspreizung (engl. delay spread) und/oder die Dopplerspreizung (engl. Doppler spread) der Übertragungskanäle.

Definiert man die (NQ + W - 1) x (KW)-Matrix $\underline{D}$ mit den Komponenten

$$\underline{D}_{Q(n-1)+q+w-1,W(k-1)+w} = \begin{cases} \underline{d}_n^{(k)} \cdot \underline{c}_q^k & \textit{für} \quad k = 1..K \\ & n = 1..N \\ & q = 1..Q \\ & w = 1..W \\ 0 & \textit{sonst} \end{cases} \tag{6}$$

und läßt man ein additives Rauschen, das durch den Vektor

$$\underline{n}=[\underline{n}_1,\underline{n}_2,...,\underline{n}_{NQ+W-1}]^T \tag{7}$$

gegeben ist, am Empfängereingang zu, so kann man das auf die gesendeten Daten zurückgehende Empfangssignal durch den Vektor

$$\underline{e}=[\underline{e}_1,\underline{e}_2,...\underline{e}_{NQ+W-1}]^T=\underline{D}\underline{h}+\underline{n} \tag{8}$$

beschreiben. Mit der Einheitsmatrix I und dem Kroneckerprodukt lassen sich die teilnehmerspezifischen Matrizen

$$\underline{D}_d^{(k)} =I^{(W)}\otimes\underline{d}^{(k)} \quad k=1..K \tag{9}$$

angeben, die nur aus den Daten der K Teilnehmer gebildet werden, sowie die teilnehmerspezifischen (QN + W - 1) x (NW)-Ma trizen

$$\underline{C}_d^{(k)} = \begin{bmatrix} I^{(N)} \otimes \underline{c}^{(k)} & 0 & .. & 0 \\ 0 & I^{(N)} \otimes \underline{c}^{(k)} & .. & .. \\ .. & 0 & .. & .. \\ .. & .. & .. & .. \\ 0 & 0 & .. & I^{(N)} \otimes \underline{c}^{(k)} \end{bmatrix}, \quad k=1..K \tag{10}$$

die die CDMA-Codes der einzelnen Teilnehmer beeinhalten. Mit

$$\underline{D}^{(k)}=\underline{C}_d^{(k)}\,\underline{D}_d^{(k)} \tag{11}$$

läßt sich die Matrix $\underline{D}$ auch darstellen in der Form

$$\underline{D}=[\underline{D}^{(1)},\underline{D}^{(2)},..\underline{D}^{(K)}]. \tag{12}$$

Die konventionelle Vorgehensweise bei der Kanal- und Datenschätzung beruht darauf, daß in jedem Burst eine Mittambel gesendet wird, siehe Fig. 1. Unter Verwendung der Matrix $\underline{G}$, die die Mittambelcodes der einzelnen Teilnehmer enthält, wird mit dem Empfangssignal $\underline{e}_m$ das auf den gesendeten Mittambeln basiert, in jedem Burst eine Kanalschätzung durchgeführt. Man erhält als Schätzergebnis für den Vektor $\underline{h}$ aus Gleichung (5)

$$\hat{\underline{h}} = \left(\underline{G}^{*T}\,\underline{G}\right)^{-1}\underline{G}^{*T}\,\underline{e}_m\ . \tag{13}$$

Basierend auf dem geschätzten Vektor $\widehat{\underline{h}}$ wird in dem jeweils aktuellen Burst die Datendetektion durchgeführt.

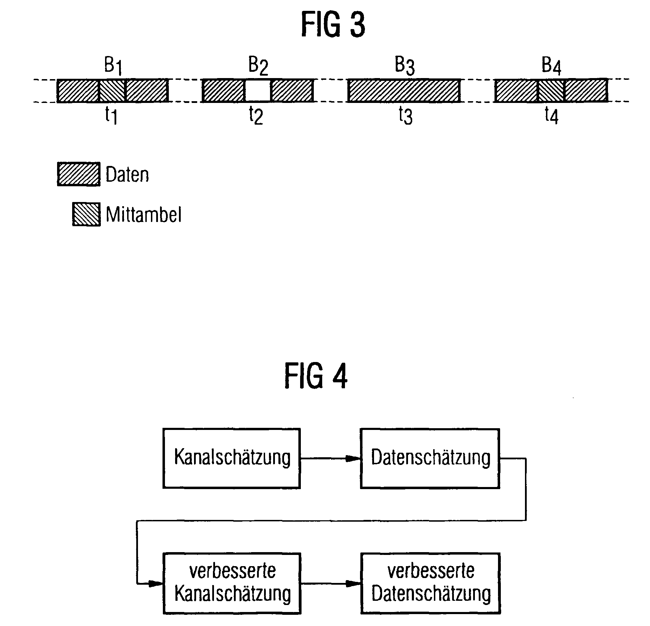

Das erfindungsgemäße Verfahren beruht darauf, daß aus den geschätzen Daten eine Kanalschätzung erfolgen kann. Dadurch erreicht man eine Verbesserung des aktuellen geschätzten Kanals $\widehat{\underline{h}}$ sowie der geschätzten Daten, siehe Fig. 4, oder ein Einsparen von Mittambeln, siehe Fig. 2 und 3. Geht man wie in Fig. 3 gezeigt davon aus, daß in Burst $B_1$, eine Mittambel gesendet wird, so läßt sich in diesem Burst die oben beschriebene Kanalschätzung durchführen und $\widehat{\underline{h}}$ ermitteln. Im zweiten Burst $B_2$ wird beispielsweise die Mittambel nicht gesendet oder es werden Daten anstelle der Mittambel gesendet.

Nimmt man langsame Bewegungen der Teilnehmer an, so kann man davon ausgehen, daß die Übertragungskanäle der einzelnen Teilnehmer näherungsweise gleich den Kanälen zum Zeitpunkt des Sendens von Burst $B_1$ sind. In Burst $B_2$ kann somit die Kanalschätzung $\widehat{\underline{h}}$, die in Burst $B_1$ durchgeführt wurde, zur Datendetektion verwendet werden. Geht man davon aus, daß der Empfangssignalvektor $\underline{e}$ nach Gleichung (8) mit der Matrix $\underline{A}$, die die mit den teilnehmerspezifischen CDMA-Codes gefalteten Kanäle beinhaltet, dem Datenvektor

$$\underline{d}=[\underline{d}^{(1)},\underline{d}^{(2)},..\underline{d}^{(K)}]^{T} \tag{14}$$

der sich aus den Vektoren nach Gleichung (1) zusammensetzt, und dem Rauschvektor $\underline{n}$ nach Gleichung (7) auch dargestellt werden kann als

$$\underline{e}=\underline{A}e+\underline{n} \tag{15}$$

SO erhält man für die geschätzten Daten des Bursts $B_2$ unter Verwendung der Matrix $\widehat{\underline{A}}$, der die geschätzten Kanäle des Bursts $B_1$ zugrunde liegen, mit dem Zero-Forcing-Algorithmus

$$\hat{\hat{\underline{d}}}_c = (\widehat{\underline{A}}^{*T}\,\widehat{\underline{A}})^{-1}\,\widehat{\underline{A}}^{*T}\,\underline{A}d + (\widehat{\underline{A}}^{*T}\,\widehat{\underline{A}})^{-1}\,\widehat{\underline{A}}^{*T}\,\underline{n} \tag{16}$$

Mit Hilfe einer Quantisierungsoperation Q{.}lassen sich die kontinuierlichen Werte der Komponenten von $\hat{\underline{d}}_c$ einzelnen Werten des komplexen Symbolalphabets $\underline{V}_d$ aus Gleichung (2) zuordnen, so daß gilt

$$\hat{\hat{\underline{d}}} = Q\{\hat{\hat{\underline{d}}}_c\} \tag{17}$$

Mit den so detektierten Daten $\hat{\underline{d}}$ des Bursts $B_2$ läßt sich mit Hilfe der Matrix $\widehat{\widehat{\underline{D}}}$, die entsprechend Gleichung (6) unter Verwendung der Komponenten von $\hat{\underline{d}}$ gebildet wird, durch Lösen der Gleichung (8) eine verbesserte Kanalschätzung $\widehat{\widehat{\underline{h}}}$ gegenüber $\widehat{\underline{h}}$ für den Burst $B_2$ erreichen, wobei gilt

$$\hat{\underline{\hat{h}}} = (\hat{\underline{\hat{D}}}^{*T} \hat{\underline{\hat{D}}})^{-1} \hat{\underline{\hat{D}}}^{*T} \underline{A}\underline{d} + (\hat{\underline{\hat{D}}}^{*T} \hat{\underline{\hat{D}}})^{-1} \hat{\underline{\hat{D}}}^{*T} \underline{n} \qquad (18)$$

Wird die verbesserte Kanalschätzung für Burst $B_2$ nun analog zu Gleichung (16) wiederum zur Datendetektion in Burst $B_2$ verwendet, so erhält man eine verbesserte Datenschätzung

$$\hat{\underline{\hat{d}}}_{c,verb.} = (\hat{\underline{\hat{A}}}^{*T} \hat{\underline{\hat{A}}})^{-1} \hat{\underline{\hat{A}}}^{*T} \underline{A}\underline{d} + (\hat{\underline{\hat{A}}}^{*T} \hat{\underline{\hat{A}}})^{-1} \hat{\underline{\hat{A}}}^{*T} \underline{n} \qquad (19)$$

und durch Quantisierung

$$\hat{\underline{\hat{d}}}_{c,verb.} = Q\left\{ \hat{\underline{\hat{d}}}_{c,verb.} \right\}. \qquad (20)$$

Eine Ausgestaltung des Verfahrens mit Funkblöcken $B_3$ ohne Trainingssignale ist bei Systemen nach Art des oben erwähnten TD-CDMA anwendbar. Wie bereits erwähnt, wird bei TD-CDMA in seiner ursprünglichen Form in jedem Burst im Zeitmulitplex mit den datentragenden Signalen ein Trainingssignal als Mittambel gesendet. Unter der Voraussetzung, daß sich die Eigenschaften der zeitvarianten Übertragungskanäle nicht zu schnell ändern, ist die aufgrund der Mittambel eines zum Zeitpunkt $t_1$ gesendeten Bursts $B_1$ ermittelte Kanalimpulsantwort auch noch in den darauffolgenden, zu den Zeitpunkten $t_2 > t_1$, $t_3 > t_2$ etc. gesendeten Bursts $B_2$, $B_3$... näherungsweise gültig. Man kann deshalb mit der für den ersten Burst geschätzten Kanalimpulsantwort eine vorläufige Datenschätzung für die folgenden Bursts $B_2$, $B_3$... vornehmen. Anhand der so geschätzten Daten der Bursts $B_2$, $B_3$... kann man dann eine verbesserte Schätzung der Kanalimpulsantworten für diese Bursts gewinnen.

Die beschriebene vierschrittige Vorgehensweise ist in Fig. 2 veranschaulicht. In einem letzten Schritt kann die Kanalschätzung für $B_2$ dazu verwendet werden, die Datenschätzung für $B_2$ zu verbessern. Das in Fig. 2 veranschaulichte Verfahren ermöglicht es, die Bursts $B_2$, $B_3$... ohne Mittambeln zu senden und dadurch Sendeleistung zu sparen, und/oder zusätzlich Übertragungskapazität für die Datenübertragung zu gewinnen, indem man anstelle der Mittambeln datentragende Signale sendet. Erst nach einer je nach Dynamik der Zeitvarianz der Kanäle mehr oder weniger langen Zeit muß wieder ein Burst mit Mittambel gesendet werden. Diese Zeitvarianz kann anhand der Veränderung der Qualität der Datenschätzung oder anderer Übertragungsparameter (z.B. Empfangsleistung) ggf. für jede Funkstation auch aus der entgegengesetzten Übertragungsrichtung beobachtet werden. Wird die Qualität zu schlecht, dann werden wieder Mittambeln gesendet.

Dieser Sachverhalt ist in Fig. 3 dargestellt. $B_1$ enthält eine Mittambel, in $B_2$ wird anstelle der Mittambel nichts gesendet (Interferenzminimierung, Sendeleistungseinsparung und damit Verringerung des Stromverbrauchs - z.B. für Mobilstationen wichtig), in $B_3$ werden anstelle der Mittambel Daten gesendet, und erst $B_4$ enthält wieder eine Mittambel.

Das in Fig. 2 veranschaulichte erfindungsgemäße Verfahren kann in einer alternativen Ausgestaltung auch im Falle von Systemen wie der Aufwärtsstrecke von WCDMA eingesetzt werden. Durch das Verfahren kann auf das ursprünglich kontinuierlich vorgesehene Senden des Trainingssignals zumindest zeitweilig verzichtet werden. Auch für diesen Zeitbereich ohne Trainingssignal liegen gültige Kanalinformationen vor.

Bei Systemen nach Art des TD-CDMA gilt die geschätzte Kanalimpulsantwort genau genommen nur für jenen Zeitbereich, in dem der auf der gesendeten Mittambel beruhende Signalanteil am Empfänger eintrifft, und nicht für die Zeitbereiche, in denen die auf den gesendeten Daten beruhenden Signalanteile der Bursts am Empfänger eintreffen. Das erfindungsgemäße Verfahren kann auch dazu dienen, die für die Datenschätzung verfügbaren Kanalimpulsantworten zu verbessern.

Eine weitere Ausgestaltung des Verfahrens ist in Fig. 4 veranschaulicht. Wenn Trainingssignale und datentragende Signale gleichzeitig gesendet werden, so kann man ähnlich wie in dem in Fig. 2 veranschaulichten Fall durch ein iteratives Vorgehen zunächst die Kanalschätzung und anschließend die Datenschätzung verbessern. Die Gleichzeitigkeit der Übertragung behindert das Verfahren nicht.

Nach weiteren vorteilhaften Ausgestaltung des erfindungsgemäßen Verfahrens können die benötigten Kanalinformationen sowohl Kanalimpulsantworten als auch einzelne Informationen über die Kanal- bzw. Ausbreitungseigenschaften sein. Ferner kann das Verfahren auch bei der Übertragung codierter Daten eingesetzt werden, indem bei der Datenschätzung lediglich eine entsprechende Decodierung im Empfänger durchgeführt wird.

Die Anwendung des erfindungsgemäßen Verfahrens ist nicht abhängig von einem bestimmten Prinzip der Datendetektion oder Kanalschätzung. Es kann vorteilhaft angewendet werden bei Einzel- (single user detection) oder Mehrsignaldetektion (multiuser detection). Eine besonders aufwandsgünstige Realisierung ergibt sich bei einer Datenschätzung nach dem Prinzip des Rake-Empfängers. Für die Kanalschätzung wird das Prinzip der Maximum-Likelihood-Schätzung oder der MMSE (minimum mean square error)-Schätzung angewendet.

Literatur

[1] A. Klein, P.W. Baier: Linear unbiased data estimation in mobile radio systems applying CDMA. IEEE Journal on Selected Areas in Communications, vol. 11, 1993, S. 1058 - 1066

[2] F. Adachi, K. Ohno, A. Higashi, T. Dohi, Y. Qkumura: Coherent multicode DS-CDMA mobile radio access. IEICE Transactions on Communications, vol. E79-B, no. 9, 1996, S. 1316 - 1324

[3] F. Adachi, M. Sawahashi: Wideband multi-rate DS-CDMA for next generation mobile communications systems. Proc. IEEE Wireless Communications Conference (WCC'97), Boulder, 1997, S. 57 - 62

**Patentansprüche**

1. Verfahren zur Kanalschätzung in einem Funk-Kommunikationssystem mit Sendern und Empfängern, die über zumindest einen Übertragungskanal einer Funkschnittstelle miteinander verbunden sind, bei dem

 über den Übertragungskanal gleichzeitig oder im Zeitmultiplex mit datentragenden Signalen zusätzlich Trainingssignale übertragen werden,
 empfangsseitig aus den Traingingssignalen Kanalinformationen über die Eigenschaften des Übertragungskanals gewonnen werden,
 empfangsseitig aus den datentragenden Signalen Informationen über gesendete Daten gewonnen werden,
 **dadurch gekennzeichnet**,
 daß anhand der Informationen über die gesendeten Daten die Kanalinformationen verbessert und/oder zusätzliche Kanalinformationen gewonnen werden.

2. Verfahren nach Anspruch 1,
 **dadurch gekennzeichnet**,
 daß die zusätzlichen Kanalinformationen für Zeitbereiche ($t_1$ bis $t_4$) gelten, in denen keine Trainingssignale gesendet werden.

3. Verfahren nach Anspruch 1,
 **dadurch gekennzeichnet**,
 daß die zusätzlichen Kanalinformationen für Zeitbereiche gelten, in denen Trainingssignale und datentragende Signale gleichzeitig gesendet werden.

4. Verfahren nach einem vorherigen Anspruch,
 **dadurch gekennzeichnet**,
 daß die zusätzlichen Kanalinformationen Kanalimpulsantworten sind.

5. Verfahren nach einem vorherigen Anspruch,
 **dadurch gekennzeichnet**,
 daß die zusätzlichen Kanalinformationen die Übertragungsdämpfung und/oder die Verzögerungsspreizung und/oder die Dopplerspreizung des Übertragungskanals betreffen.

6. Verfahren nach einem vorherigen Anspruch,
 **dadurch gekennzeichnet**,
 daß die Informationen über die gesendeten Daten Schätzwerte für gesendete Datensymbole sind.

**7.** Verfahren nach dem vorherigen Anspruch,
**dadurch gekennzeichnet**,
daß die Datenschätzung eine empfängerseitige FEC (forward error correction)-Decodierung einbezieht.

**8.** Verfahren nach einem vorherigen Anspruch,
**dadurch gekennzeichnet**,
daß die Gewinnung der Informationen über die gesendete Daten nach dem Prinzip der Einzelsignaldetektion erfolgt.

**9.** Verfahren nach einem der Ansprüche 1 bis 7,
**dadurch gekennzeichnet**,
daß die Gewinnung der Informationen über die gesendete Daten nach dem Prinzip der Mehrsignaldetektion erfolgt.

**10.** Verfahren nach einem vorherigen Anspruch,
**dadurch gekennzeichnet**,
daß die die Gewinnung der Informationen über die gesendete Daten nach dem Prinzip des Rake-Empfängers erfolgt.

**11.** Verfahren nach einem vorherigen Anspruch,
**dadurch gekennzeichnet**,
daß die Gewinnung der Kanalinformationen nach dem Prinzip der Maximum-Likelihood-Schätzung oder der MMSE (minimum mean square error)-Schätzung erfolgt.

# FIG 1

$B_1$         $B_2$         $B_3$         $B_4$

$t_1$         $t_2$         $t_3$         $t_4$

Daten

Mittambel

# FIG 2

| Kanalschätzung für $B_1$ anhand der Mittambel von $B_1$ | → | Datenschätzung für $B_2$ anhand der Kanalschätzung für $B_1$ |

| Kanalschätzung für $B_2$ anhand der Datenschätzung für $B_2$ | → | verbesserte Datenschätzung für $B_2$ anhand der Kanalschätzung für $B_2$ |

# FIG 3

B_1        B_2        B_3        B_4

t_1        t_2        t_3        t_4

Daten

Mittambel

# FIG 4

| Kanalschätzung | → | Datenschätzung |

| verbesserte Kanalschätzung | → | verbesserte Datenschätzung |